# EUROPÄISCHE PATENTSCHRIFT

(11) **EP 0 978 346 B1**
(45) Veröffentlichungstag und Bekanntmachung des Hinweises auf die Patenterteilung: **08.05.2002**
(21) Anmeldenummer: 99113468.5
(22) Anmeldetag: 13.07.1999
(51) Int. Cl.: B23K 28/02, B23K 26/00, B23K 10/00

(54) **Verfahren zum Schneiden von Y-Fasen**
Method for cutting Y bevels
Procédé pour découper des chanfreins en Y

(30) Priorität: 04.08.1998 DE 19835062
(43) Veröffentlichungstag der Anmeldung: 09.02.2000
(73) Patentinhaber: Messer Cutting & Welding GmbH, 64823 Gross-Umstadt (DE)
(72) Erfinder: Neubauer, Norbert, Dr., 90425 Nürnberg (DE); Heine, Peter, 63477 Maintal (DE)
(74) Vertreter: Staudt, Armin Walter

(56) Entgegenhaltungen:
- US-A- 4 205 828
- US-A- 4 356 043
- US-A- 5 635 086

## Beschreibung

Die Erfindung betrifft ein Verfahren zum Schneiden von Y-Fasen mittels Laser.

Das Anfasen von Blechkanten, etwa im Schiff- oder Anlagenbau, ist für einen nachfolgenden Schweißprozeß häufig unverzichtbar. Das Anfasen von Blechkanten mittels Laserschrägschnitt am isolierten Bauteil wird beschrieben in: Laser 5, 1997, S. 6-10. Bei einem solchen Verfahren muß zuerst ein senkrechter Schnitt mit dem Laser durchgeführt und dann der obere Teil der Schnittfläche mit einem Schrägschnitt entfernt werden. Dieses Verfahren hat den Nachteil, daß das Restblech vom Schneidetisch weggenommen werden muß, um genügend Platz für den Austrieb der Schlacke beim Schrägschnitt zu schaffen. Andernfalls besteht die Gefahr des Verschweißens von Gutteil und Restblech. Bei der Entnahme des Restblechs ist ein Handhabungsvorgang erforderlich. Dieser ist mit dem Nachteil verbunden, daß das Bauteil (Gutteil) seine Lage verändern kann.

Schnitte in der umgekehrten Reihenfolge (erst schräg dann senkrecht) führen zu keinem befriedigendem Ergebnis. Der schräge Schnittspalt verhindert einen sauberen senkrechten Schnitt, da die Schlacke nicht sauber nach unten ausgetrieben werden kann. US-A-4356043 offenbart ein Verfahren zur Herstellung von Bauteilen mit einer abgeschrägten Schnittkante in Form einer Y-Fase, wobei mit einem Plasmabrenner ein senkrechter Schnitt durch ein Material ausgeführt wird und nachfolgend mit einem Plasmabrenner ein schräger Schnitt entlang der erzeugten Schnittkante am Bauteil vorgenommen wird.

Der Erfindung liegt die Aufgabe zugrunde, ein Verfahren ohne die genannten Nachteile bereitzustellen.

Gelöst wurde die Aufgabe durch ein Verfahren mit den Merkmalen von Anspruch 1.

Ein geeignetes Gerät mit Plasmabrenner und Laser zur Durchführung des erfindungsgemäßen Verfahrens ist beispielsweise ein Laserschneidgerät mit Plasma-Kopf und Laser-Drehkopf, das unter der Bezeichnung LaserMat® von der Firma Messer Cutting & Welding bezogen werden kann. Das Laserschneidgerät ist in dem Prospekt Nr. 0.815.090 Ausgabe 9207/III dd, Messer Griesheim Schweißtechnik GmbH + Co. 1998, zur Maschine LaserMat®, erhältlich bei Messer Griesheim Schweißtechnik GmbH + Co., Geschäftsbereich Schneidsysteme, Otto-Hahn-Str. 2-4, D-64823 Groß-Umstadt, beschrieben.

Das Verfahren dient vorzugsweise zur Herstellung von flachen Bauteilen aus vorzugsweise flachen Materialien wie Metallblechen.

Bearbeitete Metallbleche haben in der Regel eine Dicke im Bereich von 1 bis 50 mm, vorzugsweise im Bereich von 5 bis 20 mm. Die Metallbleche bestehen beispielsweise aus Stahl, Baustahl oder Schiffsbaustahl, Edelstahl oder Aluminium.

Die mit dem Plasmabrenner erzeugten senkrechten Schnitte haben im allgemeinen eine Spaltbreite im Bereich von 1 bis 10 mm, vorzugsweise 2 bis 6 mm, besonders bevorzugt 3 bis 5 mm, insbesondere um 4 mm.

Das Verfahren für das Schneiden von Y-Fasen verwendet eine Maschine, die einen Plasmabrenner für Senkrechtschnitte hat und einen Bearbeitungskopf für Laser, mit dem sich Schrägschnitte anfertigen lassen. Erfindungsgemäß wird die Y-Fase folgendermaßen angefertigt:

Die Kontur des Bauteils wird mit dem Plasmabrenner erzeugt. Das Verfahren des Plasmaschneidens erzeugt einen Schnittspalt einer Breite von vorzugsweise etwa 4 mm. Dieser Schnittspalt ist breit genug, damit in einem zweiten Schnitt mit dem Laser die Y-Fase erzeugt werden kann. Die Genauigkeit von Plasmaschneidverfahren liegt je nach Brennertyp zwischen 0,5 mm und 2 mm. Reicht die mit dem Plasmabrenner erzielte Genauigkeit des senkrechten Schnitts für eine Anwendung nicht aus, wird ein dreistufiges Verfahren vorgeschlagen: Die Kontur wird mit dem Plasmabrenner erzeugt. Mit einem senkrechten Schnitt mit dem Laserstrahl wird das Bauteil nochmals besäumt, um die hohe Genauigkeit des Laserschneidens von etwa 0,1 mm zu erreichen. Im letzten Schritt wird mit dem schräggestellten Laserkopf die Y-Fase erzeugt.

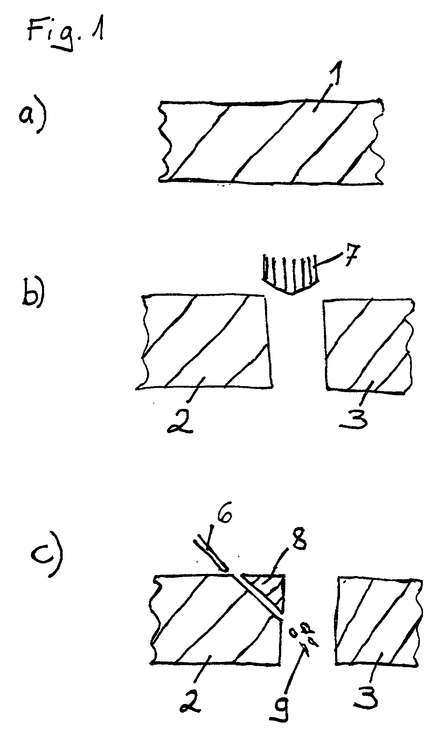

Anhand von Fig. 1 wird das erfindungsgemäße Verfahren am Beispiel von einem Stahlblech als flachem Material erläutert.

Fig. 1 a) bis c) zeigt schematisch die Verfahrensstufen des Plasma-Laser-Verfahrens.

Fig. 1 a) zeigt das unbearbeitete Blech 1. Fig. 1 b) zeigt das Blech 1 nach Ausführung eines senkrechten Schnittes mit Plasmastrahl 7, z. B. mit 4 mm Schnittbreite. Man erkennt die erzeugten Teile Bauteil 2 und Restblech 3. Restblech 3 wird nicht entfernt Im nächsten Schritt, Fig. 1 c), erfolgt der schräge Schnitt mit Laserstrahl 6 bei schräg gestelltem Laserkopf, wobei das Bauteil 2 mit fertiger Schnittkante (Y-Fase), Abfallstück 8 und Schlacke 9 gebildet werden. Die Schlakke 9 kann in den breiten Schnittspalt des Plasmaschnitts ausgetrieben werden.

### Bezugszeichenliste

- 1: unbearbeitetes flaches Material ( z. B. Blech)
- 2: Bauteil
- 3: Restmaterial (z. B. Restblech)
- 6: schräger Laserstrahl
- 7: Plasmastrahl
- 8: Abfallstück
- 9: Schlacke

## Patentansprüche

1. Verfahren zur Herstellung von Bauteilen (2) mit einer abgeschrägten Schnittkante in Form einer Y-Fase, wobei mit einem Plasmabrenner ein senkrechter Schnitt (7) durch ein Material (1) ausgeführt wird und nachfolgend mit einem Laserstrahl ein schräger Schnitt (6) entlang der erzeugten Schnittkante am Bauteil vorgenommen wird.

2. Verfahren nach Anspruch 1, **dadurch gekennzeichnet, daß** Metallbleche mit einer Dicke im Bereich von 1 bis 50 mm als Material (1) verwendet werden.

3. Verfahren nach Anspruch 1 oder 2, **dadurch gekennzeichnet, daß** der Plasmabrenner einen Schnitt mit einer Schnittbreite im Bereich von 1 bis 10 mm erzeugt.

4. Verfahren nach einem der Ansprüche 1 bis 3, **dadurch gekennzeichnet, daß** keine Teile (3) des Materials (1) während des Verfahrens entfernt werden.

5. Verfahren nach einem der Ansprüche 1 bis 4, **dadurch gekennzeichnet, daß** die mit einem Plasmabrenner erzeugte Schnittkante mit einem Laser nachbearbeitet wird.

6. Verwendung eines Plasmabrenners und eines Laser-Schneidegerätes zur Erzeugung von flachen Bauteilen (2) mit einer abgeschrägten Schnittkante in Form einer Y-Fase, gemäß dem Verfahren nach einem der Ansprüche 1 bis 5.

## Claims

1. A method for producing components (2) with a beveled cut edge in form of a Y-bevel, wherein a plasma torch is used to make a vertical cut (7) through a material (1), and then a laser beam is used to make an inclined cut (6) along the cut edge produced on the component.

2. The method as claimed in claim 1, wherein the material used is metal sheets whose thickness lies in the range from 1 to 50 mm.

3. The method as claimed in claim 1 and 2, wherein the plasma torch produces a cut whose width lies in the range from 1 to 10 mm.

4. The method as claimed in one of the claims 1 to 3, wherein no parts (3) of the material (1) are removed during the method.

5. The method as claimed in one of the claims 1 to 4, wherein the cut edge which is produced using a plasma torch is machined further using a laser.

6. Use of a plasma torch and a laser cutting appliance for producing flat components (2) with a beveled cut edge in form of a Y-bevel according to the method as claimed in one of the claims 1 to 5.

## Revendications

1. Procédé dé fabrication de pièces (2) avec une arête de coupe en biais (chanfreins en Y) selon lequel, avec un chalumeau à plasma, on effectue une coupe perpendiculaire (7) dans un matériau (1) et ensuite avec un faisceau laser, on fait une coupe en biais (6) le long de l'arête de coupe réalisée sur la pièce.

2. Procédé selon la revendication 1, **caractérisé en ce qu'** on utilise une tôle métallique d'une épaisseur de l'ordre de 1 à 50 mm comme matériau (1).

3. Procédé selon les revendications 1 ou 2, **caractérisé en ce que** le chalumeau de plasma réalise une coupe d'une largeur de l'ordre de 1 à 10 mm.

4. Procédé selon l'une quelconque des revendications 1 à 3, **caractérisé en ce qu'** on n'enlève aucune partie (3) du matériau (1) pendant le procédé.

5. Procédé selon l'une quelconque des revendications 1 à 4, **caractérisé en ce qu'** on effectue un travail complémentaire de l'arête de coupe réalisée avec le chalumeau à plasma en utilisant un laser.

6. Application d'un chalumeau à plasma et d'un appareil de coupe à laser pour réaliser des pièces plates (2) ayant une arête de coupe en biais (sous la forme d'un chanfrein en Y) selon le procédé de l'une quelconque des revendications 1 à 5.
